# EUROPÄISCHE PATENTSCHRIFT

(11) **EP 0 617 082 B1**
(45) Veröffentlichungstag und Bekanntmachung des Hinweises auf die Patenterteilung: **16.07.1997**
(21) Anmeldenummer: 94104289.7
(22) Anmeldetag: 18.03.1994
(51) Int. Cl.: C08L 23/06, B65D 75/30

(54) **Trägerblatt zur Herstellung einer Skinverpackung**
Carrier sheet for preparation of skin packages
Feuille de support pour la fabrication de skin-packs

(30) Priorität: 26.03.1993 DE 9304569 U
(43) Veröffentlichungstag der Anmeldung: 28.09.1994
(73) Patentinhaber: HOECHST AKTIENGESELLSCHAFT, 65926 Frankfurt am Main (DE)
(72) Erfinder: Görden, Sabine, D-47839 Krefeld (DE)

(56) Entgegenhaltungen:
- WO-A-85/04365
- WO-A-93/12988
- DE-A- 2 622 625
- US-A- 3 975 481

## Beschreibung

Die Erfindung betrifft ein Trägerblatt zur Herstellung einer Skinverpackung.

In der DE-A-41 42 796 ist ein Trägerblatt für Packgut zur Herstellung von Skinverpackungen beschrieben, bei dem das Trägerblatt aus Kunststoff besteht und flächig mit einer folienartigen Hülle dichtend verbunden ist. Sowohl das Trägerblatt als auch die folienartige Hülle können aus Polyethylen gefertigt sein. Dieses hat den Vorteil, daß die verbrauchte Skinverpackung als Einstoffverpackung problemlos recycled werden kann.

An Trägerblätter werden folgende Anforderungen gestellt:
1. Eine gleichmäßige Verteilung des Porendurchmessers.
2. Eine gewisse Reißfestigkeit.
3. Eine gleichmäßige Oberflächenqualität, welche eine Bedruckung zuläßt.
4. Ein Bubble Point von etwa 3o bis 1oo µm.

Gute Trägerblätter aus Polyethylen gemäß vorliegender Erfindung haben einen mittleren Porendurchmesser von 2o bis 5o µm, insbesondere 25 bis 35 µm, einen Bubble Point von 3o bis 1oo µm, insbesondere 5o bis 6o µm und eine Reißfestigkeit von 4 bis 7 N/mm². Diese Trägerblätter gewährleisten, daß die folienartige Hülle leicht und gleichmäßig mittels einer an der Unterseite des Trägerblattes befindlichen Unterdruckquelle um den Verpackungsgegenstand gezogen und dann das Trägerblatt mit der Hülle verschweißt werden kann.

Überraschend wurde gefunden, daß dann stets ein gutes Trägerblatt resultiert, wenn man als Ausgangssubstanz für die Herstellung des Trägerblattes ein Niederdruckpolyethylen mit einer Dichte von o,92 bis o,96 g/cm³, einer Viskositätszahl von 25o bis 2ooo ml/g und einer mittleren Korngröße von 8o bis 200 µm bei einer Temperatur von 170 bis 25o °C sintert.

Die Stoffwerte des Niederdruckpolyethylens werden nach folgenden Methoden bestimmt:
- Dichte:: DIN 53479
- Viskositätszahl:: DIN 53728

Die Bestimmung der mittleren Korngröße erfolgte nach der Laserbeugungsmethode mit einem Analysengerät der Firma Sympatec GmbH, Burgstätter Straße 6, D-3392 Claustal-Zellerfeld und der von der Firma ausgearbeiteten Analysenmethode.

Die Qualität des Trägerblattes wurde nach folgenden Methoden bestimmt:

Porendurchmesser und Bubble Point werden nach der ASTM F 316-86 bestimmt.
- Reißfestigkeit:: DIN 53455

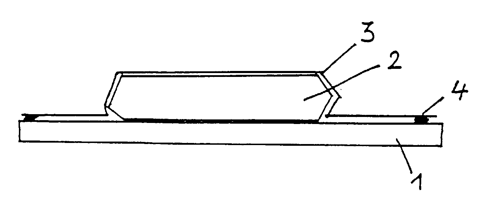

Die Zeichnung zeigt einen Schnitt durch eine Skinverpackung.

Die Skinverpackung besteht aus dem Trägerblatt 1, auf dem das Packgut 2 dicht von der folienartigen Hülle 3 umgeben ist. Die Hülle 3 und das Trägerblatt 1 sind in der Naht 4 miteinander verschweißt.

Die Erfindung wird mit nachfolgenden Beispielen erläutert:

Die in den folgenden Beispielen untersuchten Trägerblätter wurden erhalten, indem man das zu untersuchende Polyethylenpulver mit einer Walze auf einem Aluminiumblech als 1 mm dicke Schicht auftrug und den Sinterprozeß in einem Umlaufofen der Firma Heraeus, Hanau, bei 17o °C über einen Zeitraum von 2o Minuten durchführte.

Für das Vergleichsbeispiel 4 wurde der Sinterprozeß bei 19o °C und 4o Minuten durchgeführt.

### Beispiel 1

Ein Polyethylenpulver mit einer Dichte von o,94 g/cm³, einer Viskositätszahl von 6oo ml/g und einer mittleren Korngröße von 120 µm wurde gesintert.
Bei einer gleichmmäßigen Oberflächenqualität wurde ein mittlerer Porendurchmesser von 28 µm, ein Bubble Point von 55 µm und eine Reißfestigkeit von 6,5 N/mm² bestimmt.

### Vergleichsbeispiel 2

Ein Polyethylenpulver mit einer Dichte von o,95 g/cm³, einer Viskositätszahl von 32o ml/g und einer mittleren Korngröße von 21o µm wurde gesintert.
Es wurde ein mittlerer Porendurchmesser von 85 µm, ein Bubble Point von 130 µm und eine Reißfestigkeit von 6,o N/mm² ermittelt. Die Oberflächenqualität war für eine Bedruckung zu ungleichmäßig.

### Vergleichsbeispiel 3

Ein Polyethylenpulver mit einer Dichte von o,94 g/cm³, einer Viskositätszahl von 28o ml/g und einer mittleren Korngröße von 3oo µm wurde gesintert.
Es wurde ein mittlerer Porendurchmesser von 98 µm, ein Bubble Point von 138 µm und eine Reißfestigkeit von 2,5 N/mm² ermittelt. Die Oberflächenqualität war für eine Bedruckung zu ungleichmäßig.

### Vergleichsbeispiel 4

Ein Polyethylenpulver mit einer Dichte von o,93 g/cm³, einer Viskositätszahl von 24oo ml/g und einer mittleren Korngröße von 120 µm wurde gesintert.
Bei einer gleichmäßigen Oberflächenqualität wurde ein mittlerer Korndurchmesser von 25 µm, ein Bubble Point von 52 µm und eine Reißfestigkeit von 2 N/mm² bestimmt. Wegen der fehlenden Steifigkeit eignet sich dieses Produkt nicht als Trägerboden.

## Patentansprüche

1. Trägerblatt zur Herstellung einer Skinverpackung mit einem mittleren Porendurchmesser von 20-50 µm, insbesondere 25-35 µm, einem Bubble Point von 30-100 µm, insbesondere 50-60 µm, und einer Reißfestigkeit von 4 bis 7 N/mm² aus Niederdruckpolyethylen, dadurch gekennzeichnet, daß man das Niederdruckpolyethylen mit einer Dichte von 0.92 bis 0.96 g/cm³, einer Viskositätszahl von 250-2000 ml/g und einer mittleren Korngröße von 80-200 µm bei einer Temperatur von 170- 250°C sintert.

## Revendications

1. Feuille support pour réaliser un emballage pelliculé avec un diamètre moyen de pores de 20-50 µm, notamment 25-35 µm, un point de bulle de 30-100 µm, notamment 50-60 µm, et une résistance à la déchirure de 4 à 7 N/mm² en polyéthylène basse pression, caractérisé en ce qu'on fritte le polyéthylène basse pression avec une masse moléculaire de 0,92 à 0,96 g/cm³, un indice de viscosité de 250-2000 ml/g et une granulométrie moyenne de 80-200 µm à une température de 170-250°C.

## Claims

1. A carrier sheet for preparing skin packaging made of low-pressure polyethylene having an average pore diameter of 20 to 50 µm, in particular 25 to 35 µm, a bubble point of 30 to 100 µm, in particular 50 to 60 µm, and an ultimate tensile strength of 4 to 7 N/mm², characterised in that low-pressure polyethylene having a density of 0.92 to 0.96 g/cm³, a viscosity number of 250 to 2000 ml/g and an average grain size of 80 to 200 µm is sintered at a temperature of 170 to 250°C.
